# EUROPEAN PATENT APPLICATION

(11) **EP 4 685 262 A1**
(43) Date of publication of application: **28.01.2026**
(21) Application number: 24842766.8
(22) Date of filing: 22.03.2024
(51) Int. Cl.: C23C 2/14, C23C 2/06

(54) **PLATING ADHESION AMOUNT PREDICTION METHOD, HOT-DIP GALVANIZED STEEL STRIP MANUFACTURING METHOD, PLATING ADHESION AMOUNT PREDICTION MODEL GENERATION METHOD, AND PLATING ADHESION AMOUNT PREDICTION DEVICE**

(30) Priority: 18.07.2023 JP 2023116448
(71) Applicant: JFE Steel Corporation, Tokyo, 100-0011 (JP)
(72) Inventor: YOSHIMOTO, Soshi, Tokyo 100-0011 (JP)
(74) Representative: Grünecker Patent- und Rechtsanwälte PartG mbB
(86) International application number: PCT/JP2024/011308
(87) International publication number: WO 2025/017965

(57) **Abstract**

There is provided a coating weight prediction method which can predict the coating weight of a galvanized steel strip with high accuracy.

The coating weight prediction method for predicting a coating weight of a galvanized steel strip in a galvanized steel strip production facility including a coating section for dipping a steel strip, which has been annealed in an annealing section, in a galvanizing bath, includes: a parameter acquisition step of acquiring one or more of the operational parameters of the coating section, and one or more of the operational parameters of the annealing section; and a coating weight prediction step of inputting input data, including the operational parameters acquired in the parameter acquisition step, into a coating weight prediction model, and causing the model to output the coating weight.

## Description

### Technical Field

The present invention relates to a coating weight prediction method, a galvanized steel strip production method, a coating weight prediction model generation method, and a coating weight prediction device.

### Background Art

A galvanized steel sheet production facility for producing galvanized steel sheets generally includes an annealing apparatus for annealing a steel strip, a coating apparatus for coating the steel strip, and a reheating apparatus for reheating the steel strip. The annealing apparatus has a preheating zone, a heating zone, a soaking zone, and a cooling zone. The coating apparatus includes a zinc bath for dipping the steel strip in it, and an apparatus for adjusting the zinc coating weight. The reheating apparatus has an alloying zone, a heat retention zone, and a cooling zone.

In order to predict and control the zinc coating weight of a steel sheet in such a galvanized steel sheet production facility, various methods have been proposed in the past. Patent Literature 1 discloses a method for controlling the amount of galvanized coating using a database into which various operational data of a coating section are inputted, and from which the distance between a wiping nozzle and a steel sheet or the gas pressure of a wiping nozzle is outputted. Patent Literature 1 reports that the distance between the wiping nozzle and a steel sheet or the gas pressure of the wiping nozzle can be determined by using, as input items, the zinc coating weight, thickness, and width of the coated steel sheet, the line speed of the steel sheet, etc., making it possible to control the amount of the galvanized coating.

### Citation List

### Patent Literature

PTL 1: Japanese Unexamined Patent Application Publication No. 2007-262503

### Summary of Invention

### Technical Problem

However, the method disclosed in Patent Literature 1 does not have a sufficiently high accuracy of prediction of the zinc coating weight of a steel sheet. The present invention has been made in view of such a conventional technique. It is therefore an object of the present invention to provide a coating weight prediction method and a coating weight prediction device which can predict the coating weight of a galvanized steel strip with high accuracy. It is also an object of the present invention to provide a galvanized steel strip production method using the coating weight prediction method, and a coating weight prediction model.

### Solution to Problem

The present invention has the following features for solving the above problem.
[1] A coating weight prediction method for predicting a coating weight of a galvanized steel strip in a galvanized steel strip production facility including a coating section for dipping a steel strip, which has been annealed in an annealing section, in a galvanizing bath, the method comprising: a parameter acquisition step of acquiring one or more of the operational parameters of the coating section, and one or more of the operational parameters of the annealing section; and a coating weight prediction step of inputting input data, including the operational parameters acquired in the parameter acquisition step, into a coating weight prediction model, and causing the model to output the coating weight.
[2] The coating weight prediction method according to [1], wherein in the parameter acquisition step, one or more of the quality property parameters of the steel strip are also acquired, and in the coating weight prediction step, input data including the operational parameters and the quality property parameters, acquired in the parameter acquisition step, is inputted into the coating weight prediction model, and the model is caused to output the coating weight.
[3] The coating weight prediction method according to [1] or [2], wherein the coating weight prediction model is a machine-learned model obtained by subjecting a machine learning model to machine learning using a plurality of data sets, each consisting of actual values of the input data and an actual value of the coating weight, as training data.
[4] The coating weight prediction method according to [3], wherein the machine learning model is one of a neural network, decision tree learning, random forest, and support vector regression.
[5] A method for producing a galvanized steel strip using a galvanized steel strip production facility including a coating section for dipping a steel strip, which has been annealed in an annealing section, in a galvanizing bath, the method comprising: an operational parameter identification step of identifying an operational parameter of the coating section which makes a coating weight, predicted in the coating weight prediction step in the coating weight prediction method according to any one of [1] to [4], fall within a preset target value range; and a galvanized steel strip production step of producing a galvanized steel strip under production conditions including the operational parameter of the coating section, identified in the operational parameter identification step.
[6] A method for generating a coating weight prediction model for predicting a coating weight of a galvanized steel strip in a galvanized steel strip production facility including a coating section for dipping a steel strip, which has been annealed in an annealing section, in a galvanizing bath, the method comprising: a data set acquisition step of acquiring a plurality of data sets, each consisting of actual values of input data and an actual value of the coating weight, the input data including one or more of the operational parameters of the coating section, and one or more of the operational parameters of the annealing section; and a coating weight prediction model generation step of subjecting a machine learning model to machine learning using the plurality of data sets as training data to generate the coating weight prediction model.
[7] The method for generating a coating weight prediction model according to [6], wherein in the data set acquisition step are acquired a plurality of data sets, each consisting of actual values of input data and an actual value of the coating weight, the input data including one or more of the operational parameters of the coating section, one or more of the operational parameters of the annealing section, and one or more of the quality property parameters of the steel strip.
[8] The method for generating a coating weight prediction model according to [6] or [7], wherein the machine learning model is one of a neural network, decision tree learning, random forest, and support vector regression.
[9] A coating weight prediction device for predicting a coating weight of a galvanized steel strip in a galvanized steel strip production facility including a coating section for dipping a steel strip, which has been annealed in an annealing section, in a galvanizing bath, the device comprising: a parameter acquisition unit for acquiring one or more of the operational parameters of the coating section, and one or more of the operational parameters of the annealing section; and a coating weight prediction unit for inputting input data, including the operational parameters acquired in the parameter acquisition unit, into a coating weight prediction model, and causing the model to output the coating weight.
[10] The coating weight prediction device according to [9], wherein the parameter acquisition unit also acquires one or more of the quality property parameters of the steel strip, and the coating weight prediction unit inputs input data including the operational parameters and the quality property parameters, acquired in the parameter acquisition unit, into the coating weight prediction model, and causes the model to output the coating weight.

### Advantageous Effects of Invention

According to the present invention, a coating weight of a galvanized steel strip is predicted using an operational parameter(s) of the annealing section, and therefore the coating weight can be predicted with higher accuracy than ever before. Furthermore, by controlling the production conditions of a galvanized steel strip using the predicted coating weight, it becomes possible to stably produce a galvanized steel strip whose coating weight falls within a preset target value range.

### Brief Description of Drawings

[FIG. 1] FIG. 1 is a schematic diagram showing an example of a galvanized steel strip production facility including a coating weight prediction device which can execute a coating weight prediction method according to the present embodiments.
[FIG. 2] FIG. 2 is a schematic cross-sectional view of a coating section.
[FIG. 3] FIG. 3 is a graph showing the heat history of a steel strip in an annealing section and a reheating section of a galvanized steel strip production apparatus for producing a galvanized steel strip.
[FIG. 4] FIG. 4 is a schematic diagram showing an example construction of a coating weight prediction device.
[FIG. 5] FIG. 5 is a flow diagram showing an example of a process for identifying an operational parameter(s) of a coating section by means of an operational parameter identification unit.
[FIG. 6] FIG. 6 is a schematic diagram showing a method for generating a coating weight prediction model. Description of Embodiments

The present inventors have found that an operational parameter(s) in a section other than a coating section also affects the coating weight of a galvanized steel strip. In particular, it has been confirmed that a change in the temperature of a steel strip at the exit of a cooling zone of an annealing section, provided upstream of the coating section, causes a change in the viscosity of a zinc coating that adheres to the surface of the steel strip in a galvanizing bath, resulting in a change in the coating weight even though the other wiping conditions are the same. It has also been confirmed that the change in the temperature of the steel strip causes a change in the mechanical properties of the steel strip, leading to a change in the shape of the steel strip in the width direction during conveyance on rolls. This causes a change in the distance between a gas wiping apparatus and the steel strip, resulting in a change in the coating weight even though the other wiping conditions are the same. Thus, an operational parameter(s) of an annealing section will also affect the coating weight of a galvanized steel strip. Based on this finding, the present inventors have arrived at the idea of using an operational parameter(s) of an annealing section, which affects the coating weight of a galvanized steel strip, to predict the coating weight of a galvanized steel strip. The present invention will now be described specifically through embodiments of the present invention. It is to be understood that the following embodiments illustrate preferred examples of the present invention, and that the present invention is not limited to the embodiments.

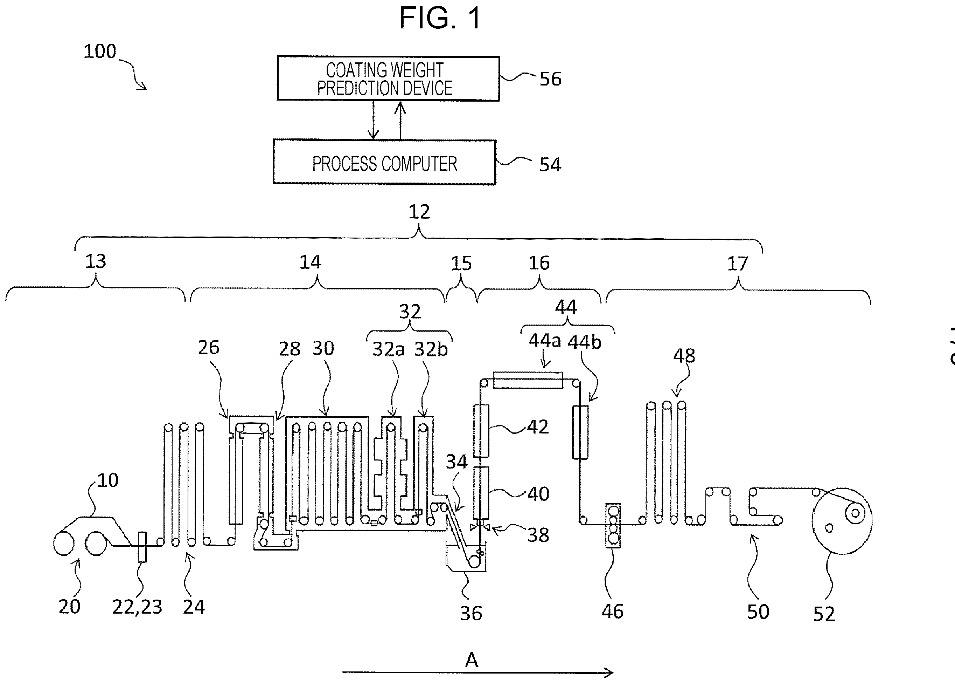

FIG. 1 is a schematic diagram showing an example of a galvanized steel strip production facility 100 including a coating weight prediction device which can execute a coating weight prediction method according to the present embodiments. The galvanized steel strip production facility 100 is a facility for continuously producing a galvanized steel strip by continuously annealing a steel strip 10, which has undergone a hot rolling process, a pickling process, and a cold rolling process and whose thickness has been reduced to a predetermined thickness, and dipping it in a galvanizing bath to coat the steel strip 10. Arrow A in FIG. 1 indicates the conveying direction of the steel strip 10.

The galvanized steel strip production facility 100 includes a galvanized steel strip production apparatus 12, a process computer 54, and a coating weight prediction device 56. The galvanized steel strip production apparatus 12 includes an entry-side section 13, an annealing section 14, a coating section 15, a reheating section 16, and an exit-side section 17.

The entry-side section 13 includes payoff reels 20, a welding machine 22, an electrolytic cleaning apparatus 23, and an entry-side looper 24. The annealing section 14 is provided downstream of the entry-side section 13. The annealing section 14 includes a heating zone 28, a soaking zone 30, and a cooling zone 32. In some cases, a preheating zone 26 may be provided upstream of the heating zone 28.

In the annealing section 14, the steel strip 10 is annealed by heating it from around room temperature, holding it at a preset temperature, and then cooling it to a temperature suitable for galvanizing. The heating zone 28 is an equipment for heating the steel strip 10, and heats the steel strip 10 to a temperature which has been set according to the type of the steel. A direct-fire or radiant burner is used in the heating zone 28; however, there is no particular limitation on a heating method. The soaking zone 30 is an equipment for holding the steel strip 10 at a predetermined temperature, and is an equipment having such a heating capacity as to compensate for heat dissipated from the furnace body, etc.

The cooling zone 32 is an equipment for cooling the steel strip 10 to a temperature suitable for galvanizing. Gas jet cooling is generally used as a cooling means; however, a cooling method is not particularly limited as long as it can cool the steel strip to a predetermined cooling temperature. The cooling zone 32 may be divided into a plurality of zones, such as a first cooling zone 32a and a second cooling zone 32b, and the heat history of the steel strip during cooling may be controlled by changing the cooling conditions of the cooling means.

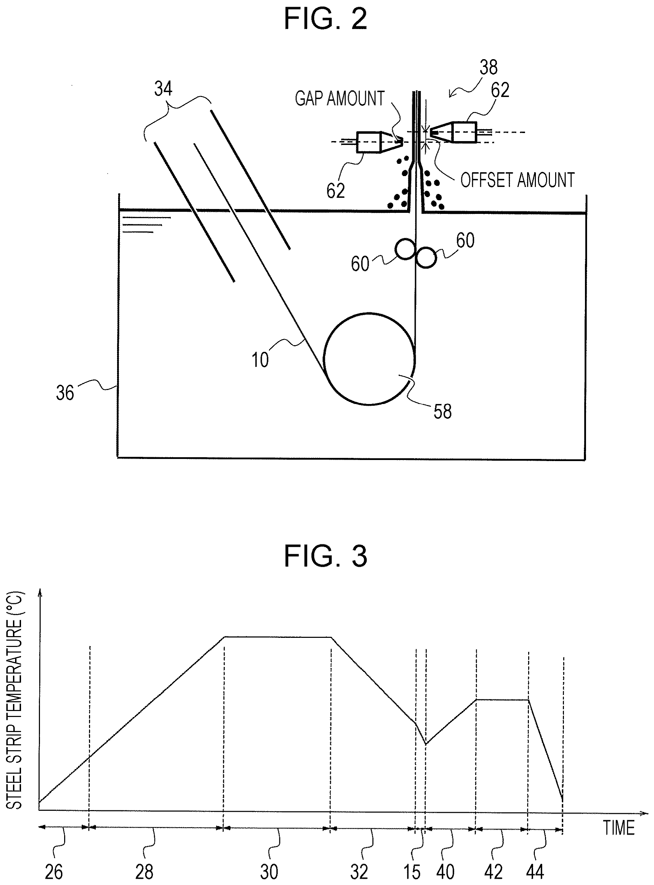

A coating section 15 is provided downstream of the annealing section 14. FIG. 2 is a schematic cross-sectional view of the coating section 15. The coating section 15 includes a snout 34 connected to the exit of the cooling zone 32, a galvanizing bath 36, and a wiping apparatus 38. The snout 34 is a member having a rectangular cross section, which defines a space through which the steel strip 10 passes. A mixed gas comprising hydrogen, nitrogen, and water vapor is supplied into the snout 34, and the atmosphere gas is adjusted until the steel strip 10 is dipped into the galvanizing bath 36.

The galvanizing bath 36 is a bottomed rectangular cylindrical container internally having a sink roll 58 and support rolls 60 and in which molten zinc is housed. The sink roll 58 dips the steel strip 10, which has passed through the snout 34, downward into the galvanizing bath 36, and pulls up the steel strip 10, with molten zinc attached to its surface, above the galvanizing bath. The support rolls 60 are provided above the sink roll 58, and corrects the shape of the steel strip 10, such as warping, to stabilize the path. The wiping apparatus 38 blows a wiping gas to the steel strip 10 from a pair of nozzles 62 disposed on both sides of the steel strip 10, and wipes off excess molten zinc, adhering to the surface of the steel strip 10, to adjust the amount of galvanized coating.

An offset amount and a gap amount of the wiping apparatus 38 will now be described. The offset amount refers to the vertical (longitudinal direction of the steel strip) distance between positions at which the wiping gas, ejected from the pair of nozzles 62, hits the steel strip 10. The gap amount refers to the width of the opening of each nozzle 62 from which the wiping gas is ejected.

Referring again to FIG. 1, the reheating section 16 is provided downstream of the coating section 15. The reheating section 16 includes an alloying zone 40, a heat retention zone 42, and a final cooling zone 44. An induction heating apparatus is disposed in the alloying zone 40. In the alloying zone 40, the temperature of the steel strip 10, which has been reduced in the coating section 15, is raised again to promote a Zn-Fe alloying reaction. In the heat retention zone 42, the temperature of the steel strip 10 is maintained so as to allow the alloying reaction to proceed. In the final cooling zone 44, the steel strip 10 is cooled to room temperature. As with the cooling zone 32, the final cooling zone 44 may be divided into a plurality of zones, such as a first final cooling zone 44a and a second final cooling zone 44b, to control the heat history of the steel strip 10 during cooling.

The exit-side section 17 is provided downstream of the reheating section. The exit-side section 17 includes a temper rolling zone 46, an exit-side looper 48, an inspection zone 50, and a tension reel 52. The exit-side looper 48 is an apparatus for temporarily retaining the steel strip 10 in order to adjust the conveying speed of the steel strip 10 and the processing speed in the exit-side section 17. The inspection zone 50 is an apparatus for inspecting the dimensional accuracy, the surface quality, etc. of the steel strip 10. The tension reel 52 is an apparatus for coiling the steel strip 10. A steel strip 10, which has been coiled by the tension reel 52 and determined to be acceptable by a quality inspection performed in the inspection zone 50, is shipped as a product coil. On the other hand, a steel strip 10, which has been determined to be unacceptable by a quality inspection performed in the inspection zone 50, is sent to a recoil line, where the steel strip 10 is subjected to an adjustment of the dimensions and weight of the steel strip 10, sampling for quality checking, an inspection of the shape and dimensions, rewinding of the coil, etc.

A thermometer(s) for measuring the surface temperature of the steel strip 10 is preferably installed in the annealing section 14, the coating section 15, and the reheating section 16. A thermometer is particularly preferably installed in the annealing section 14 before the coating section 15 to measure the temperature of the steel strip 10. The thermometer for measuring the temperature of the steel strip 10 is preferably a radiation thermometer which continuously measures the surface temperature of the width-direction center of the steel strip 10. A profile radiation thermometer which measures a width-direction temperature distribution in the steel strip 10 may also be used. In addition to the thermometer(s) for measuring the surface temperature of the steel strip 10, it is possible to install a furnace thermometer for measuring the ambient temperature in a furnace in each of the annealing section 14 and the reheating section 16. The measured surface temperature of the steel strip 10 and the measured ambient temperature are outputted to the process computer 54.

FIG. 3 is a graph showing the temperature of the steel strip 10 in the annealing section 14 to the reheating section 16 of the galvanized steel strip production apparatus for producing a galvanized steel strip. In FIG. 3, the abscissa axis represents time, and the ordinate axis represents the temperature of the steel strip 10. The temperature of the steel strip 10 is the surface temperature of the steel strip 10. An annealing process is carried out in the preheating zone 26, the heating zone 28, the soaking zone 30, and the cooling zone 32, and then the steel strip 10 passes through the coating section 15. A reheating process is then carried out in the alloying zone 40, the heat retention zone 42, and the final cooling zone 44.

In order to control variation in coating weight depending on the position of the steel strip 10 in the longitudinal direction, the conveying speed of the steel strip 10 in the annealing section 14 is kept constant. However, in the case where steel strips 10 with different thicknesses, widths, steel types, etc. have been welded together, the line speed may change before and after the weld. Thus, the heat history of the steel strip 10 may vary depending on the position at which the temperature of the steel strip 10 is measured.

The process computer 54 is, for example, a general-purpose computer such as a workstation or a personal computer. The process computer 54 is connected by wire or wirelessly to the galvanized steel strip production apparatus 12, and controls the overall galvanized steel strip production process. Further, the process computer 54 obtains quality property parameters of the steel strip 10 from a higher-level computer. The quality property parameters include, for example, the thickness, the width, the yield stress, the tensile strength, and the surface roughness of the steel strip 10. The surface roughness of the steel strip 10 may be measured in real time and in a contactless manner by means of a surface roughness meter using a laser irradiation method, provided in front of the galvanizing bath 36.

The process computer 54 acquires and stores operational parameters of the entry-side section 13, the annealing section 14, the coating section 15, the reheating section 16, and the exit-side section 17 in the production of a galvanized steel strip. The process computer 54 acquires, for example, the line speed and tension of the steel strip 10 in the soaking zone 30, and the surface temperature of the steel strip 10 being dipped into the galvanizing bath 36, as the operational parameters of the annealing section 14. The surface temperature of the steel strip 10 is preferably measured in real time and in a contactless manner using a radiation thermometer provided in front of the galvanizing bath 36.

Further, the process computer 54 acquires, for example, the coating temperature of the galvanizing bath 36, the push-in amount of the support rolls 60 against the steel strip 10, the height of the nozzles 62 from the bath surface, the wiping gas ejection angle of the nozzles 62, the gap amount of the opening of each nozzle 62, the distance between each nozzle 62 and the steel strip 10, the offset amount of the nozzles 62, and the wiping gas ejection pressure of the nozzles 62, as the operational parameters of the coating section 15.

The coating weight prediction device 56 acquires an operational parameter(s) of the coating section 15, an operational parameter(s) of the annealing section 14, and a quality property parameter(s) of the steel strip 10 from the process computer 54. The coating weight prediction device 56 inputs input data, including the acquired parameters, into a coating weight prediction model, and causes the model to output a coating weight. In this manner, the coating weight prediction device 56 predicts the coating weight of a galvanized steel strip produced by the galvanized steel strip production apparatus 12. The coating weight prediction device 56 identifies an operational parameter(s) of the coating section which makes the predicted coating weight fall within a predetermined target value range. The coating weight prediction device 56 outputs the identified operational parameter(s) of the coating section to the process computer 54 so that it sets the identified operational parameter(s) as an operational parameter(s) of the coating section.

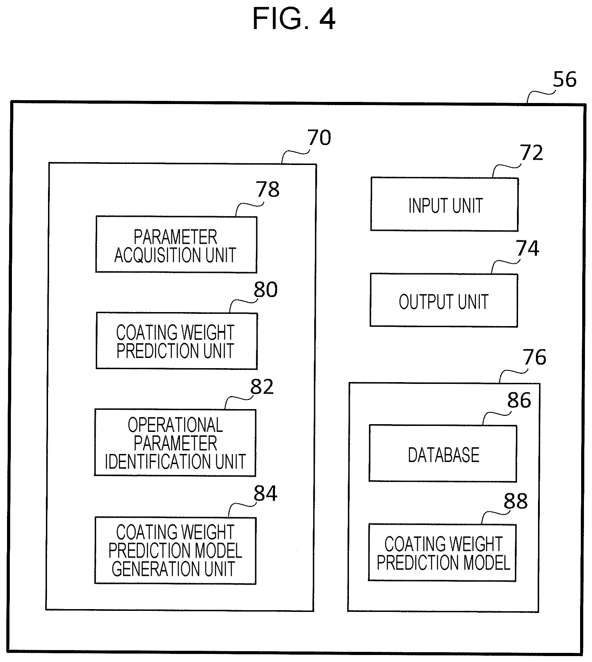

A description will now be given of the coating weight prediction device 56 for predicting a coating weight of a galvanized steel strip. FIG. 4 is a schematic diagram showing an example construction of the coating weight prediction device 56. The coating weight prediction device 56 is, for example, a general-purpose computer such as a workstation or a personal computer. The coating weight prediction device 56 includes a control unit 70, an input unit 72, an output unit 74, and a storage unit 76. The control unit 70 is, for example, a CPU and, through the execution of a program stored in the storage unit 76, functions as a parameter acquisition unit 78, a coating weight prediction unit 80, an operational parameter identification unit 82, and a coating weight prediction model generation unit 84.

The input unit 72 is, for example, a keyboard or a touch screen integrated in a display. The output unit 74 is, for example, an LCD or a CRT display. The storage unit 76 includes, for example, an information recording medium such as an updatable flash memory, a hard disk which is built in or connected via a data communication terminal to the computer, or a memory card, and a read/write device therefor. The storage unit 76 stores a program and data for achieving the functions of the coating weight prediction device 56. The storage unit 76 also stores a database 86 and a coating weight prediction model 88. The database 86 stores 200 or more, preferably 1000 or more, data sets consisting of actual values for galvanized steel strips produced in the past by the same galvanized steel strip production apparatus 12. The data sets each consist of actual values of input data, including an operational parameter(s) of the coating section 15, an operational parameter(s) of the annealing section 14, and a quality property parameter(s) of the steel strip 10, and an actual value of the coating weight.

The coating weight prediction model 88 is a machine-learned model that has been machine-learned using the data sets, stored in the database 86, as training data. The coating weight prediction model 88 according to this embodiment is a machine-learned model that receives input data including an operational parameter(s) of the coating section 15, an operational parameter(s) of the annealing section 14, and a quality property parameter(s) of the steel strip 10, and outputs a coating weight. This embodiment illustrates a case in which an operational parameter(s) of the coating section 15, an operational parameter(s) of the annealing section 14, and a quality property parameter(s) of the steel strip 10 are used as input data; however, the present invention is not limited to such a case. The input data may include a parameter(s) other than the above-described ones, and may not include any quality property parameter of the steel strip 10.

A description will now be given of processing performed by the parameter acquisition unit 78 and the coating weight prediction unit 80. The parameter acquisition unit 78 acquires, as input data, an operational parameter(s) of the coating section 15 and an operational parameter(s) of the annealing section 14 from the process computer 54. The processing by the parameter acquisition unit 78 corresponds to a parameter acquisition step.

The parameter acquisition unit 78 acquires, as input data, one or more of the following exemplary operational parameters of the coating section 15 from the process computer 54.

### <Operational Parameters of Coating Section 15>

Coating temperature of the galvanizing bath 36
Push-in amount of the support rolls 60 against the steel strip 10
Height of the nozzles 62 from the bath surface
Wiping gas ejection angle of the nozzles 62
Gap amount of the opening of each nozzle 62
Distance between each nozzle 62 and the steel strip 10
Offset amount of the nozzles 62
Wiping gas ejection pressure of the nozzles 62

The smaller the push-in amount of the support rolls 60 against the steel strip 10, the lower the tension applied to the steel strip 10; therefore, the steel strip 10 is more likely to bend. A bend of the steel strip 10 changes the distance from each nozzle 62 to the front or back surface of the steel strip 10 upon blowing of the wiping gas. This causes a change in the pressure of the wiping gas that wipes off the coating, resulting in a change in the coating weight.

The higher the height of the nozzles 62 from the bath surface, the larger the amount of the coating that falls under its own weight before wiping; therefore, the coating weight is smaller if the other wiping conditions are the same. The longer the distance between each nozzle 62 and the steel strip 10, the lower the pressure of the gas that wipes off the coating on the steel strip surface; therefore, the coating weight is smaller if the other wiping conditions are the same.

The lower the wiping gas ejection pressure of the nozzles 62, the lower the pressure of the gas that wipes off the coating on the steel strip surface; therefore, the coating weight is larger if the other wiping conditions are the same. The higher the coating temperature of the galvanizing bath 36, the lower the viscosity of zinc on the surface of the steel sheet upon blowing of the wiping gas to the steel strip 10; therefore, the coating weight is smaller if the other wiping conditions are the same. The smaller the wiping gas ejection angle of the nozzles 62 (the smaller one of the angles between the wiping gas ejection direction of each nozzle and the steel strip), the lower the pressure of the gas that wipes off the coating on the steel strip surface; therefore, the coating weight is larger if the other wiping conditions are the same.

The larger the gap amount of the opening of each nozzle 62, the lower the wiping gas ejection pressure of the nozzles 62, and thus the lower the pressure of the gas that wipes off the coating on the steel strip surface; therefore, the coating weight is larger if the other wiping conditions are the same. When the offset amount of the nozzles 62 is small, the wiping gases on both sides of the steel strip 10 collide with each other at the edges of the steel strip 10, causing edge splashing. This results in a reduction in the coating weight. The above-described operational parameters thus affect the coating weight. Therefore, the accuracy of prediction of the coating weight is improved by acquiring one or more of the operational parameters of the coating section 15, and using the acquired parameters as input data in the coating weight prediction model.

Further, the parameter acquisition unit 78 acquires, as input data, one or more of the following exemplary operational parameters of the annealing section 14 from the process computer 54.

### <Operational Parameters of Annealing Section 14>

Dew point
Temperature
Residence time in furnace
Line speed of the steel strip 10
Line tension of the steel strip 10
Surface temperature of the steel strip 10 being dipped into the galvanizing bath 36

The higher the dew point of the annealing section 14, the more an oxide is formed on the surface of the steel strip 10, and the lower the adhesion of the coating to the surface of the steel strip 10. Therefore, the coating weight is smaller if the other wiping conditions are the same. A higher temperature of the annealing section 14 or a longer residence time in the furnace leads to a lower surface hardness of the steel strip 10 and a smaller amount of plastic strain on the surface. The plastic strain activates the surface of the steel strip 10 and increases the rate of growth of an alloy layer during galvanization. Accordingly, a higher temperature of the annealing section 14 or a longer residence time in the furnace leads to a smaller coating weight if the other wiping conditions are the same.

The higher the line speed of the steel strip 10 in the annealing section 14, the larger the amount of the coating lifted by the steel strip surface per unit time; therefore, the coating weight is larger if the other wiping conditions are the same. The lower the tension of the steel strip 10, the more the steel strip 10 is likely to bend. A bend of the steel strip 10 changes the distance from each nozzle 62 to the front or back surface of the steel strip 10 upon blowing of the wiping gas. This causes a change in the pressure of the wiping gas that wipes off the coating, resulting in a change in the coating weight.

The higher the surface temperature of the steel strip 10 being dipped into the galvanizing bath 36, the lower the viscosity of zinc on the surface of the steel strip 10 upon blowing of the wiping gas to the steel strip 10; therefore, the coating weight is smaller if the other wiping conditions are the same. The above-described operational parameters thus affect the coating weight. Therefore, the accuracy of prediction of the coating weight is improved by acquiring one or more of the operational parameters of the annealing section 14, and using the acquired parameters as input data in the coating weight prediction model.

Further, the parameter acquisition unit 78 preferably acquires, as input data, one or more of the following exemplary quality property parameters of the steel strip 10 from the process computer 54.

### <Quality Property Parameters of Steel Strip 10>

Thickness
Width
Yield stress
Tensile strength
Surface roughness

The smaller the thickness and larger the width of the steel strip 10, the lower the rigidity of the steel strip 10; therefore, the steel strip 10 is more likely to bend during its conveyance. A bend of the steel strip 10 changes the distance from each nozzle 62 to the front or back surface of the steel strip 10 upon blowing of the wiping gas. This causes a change in the pressure of the wiping gas that wipes off the coating, resulting in a change in the coating weight. The lower the yield stress and tensile strength of the steel strip 10, the lower the rigidity with the same steel strip dimensions; therefore, the steel strip 10 is more likely to bend. A bend of the steel strip 10 leads to a change in the coating weight for the same reasons as described above for the case of smaller thickness and larger width.

The higher the surface roughness of the steel strip 10, the higher the coefficient of friction between the steel strip 10 and the coating; therefore, the coating weight is larger if the other wiping conditions are the same. The above-described quality property parameters thus affect the coating weight. Therefore, the accuracy of prediction of the coating weight is improved by acquiring one or more of the quality property parameters of the steel strip 10, and using the acquired parameters as input data in the coating weight prediction model. The parameter acquisition unit 78 outputs the acquired input data to the coating weight prediction unit 80.

The coating weight prediction unit 80, upon acquisition of input data from the parameter acquisition unit 78, reads the coating weight prediction model 88 from the storage unit 76, inputs the input data into the coating weight prediction model 88, and causes the model to output a coating weight. In this manner, the coating weight prediction unit 80 predicts a coating weight. The above processing by the coating weight prediction unit 80 corresponds to a coating weight prediction step. The coating weight prediction unit 80 may output the output coating weight to the output unit 74, and cause the output unit 74 to display the coating weight of the galvanized steel strip. This allows an operator to visually check the predicted coating weight value of the galvanized steel strip by viewing the output unit 74.

A description will now be given of processing in the operational parameter identification unit 82 and the coating weight prediction model generation unit 84. The operational parameter identification unit 82 identifies an operational parameter of the coating section which makes the coating weight of the galvanized steel strip, predicted by the coating weight prediction unit 80, fall within a preset target value range. The operational parameter identification unit 82 outputs the identified operational parameter to the process computer 54, and the process computer 54 sets the identified operational parameter as an operational parameter of the coating section.

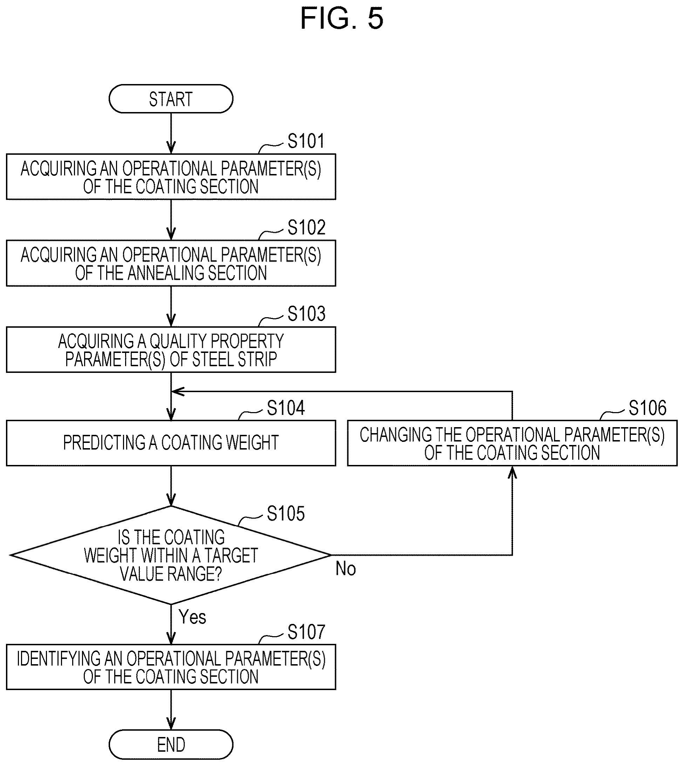

FIG. 5 is a flow diagram showing an example of a process for identifying an operational parameter(s) of the coating section by means of the operational parameter identification unit 82. The flow shown in FIG. 5 is initiated, for example, by receiving an input by an operator to initiate the process.

First, the parameter acquisition unit 78 acquires from the process computer 54 an operational parameter(s) of the coating section 15 for a galvanized steel strip to be produced (step S101). The parameter acquisition unit 78 acquires an operational parameter(s) of the annealing section 14 from the process computer 54 (step S102). Further, the parameter acquisition unit 78 acquires a quality property parameter(s) of the steel strip 10 from the process computer 54 (step S103). The parameter acquisition unit 78 outputs the acquired operational parameter(s) of the coating section 15, operational parameter(s) of the annealing section 14, and quality property parameter(s) to the coating weight prediction unit 80.

The coating weight prediction unit 80 reads the coating weight prediction model 88 from the storage unit 76. The coating weight prediction unit 80 inputs the acquired operational parameter(s) of the coating section 15, operational parameter(s) of the annealing section 14, and quality property parameter(s) into the coating weight prediction model 88, and causes the model to output a coating weight. In this manner, the coating weight prediction unit 80 predicts the coating weight of a galvanized steel sheet to be produced (step S104). The coating weight prediction unit 80 outputs the output predicted coating weight value to the operational parameter identification unit 82.

A target value range for the coating weight of a galvanized steel sheet may be pre-determined and pre-stored in the storage unit 76, or may be inputted by an operator from the input unit 72. Upon acquisition of a predicted coating weight value and a target value range for the coating weight of a galvanized steel sheet, the operational parameter identification unit 82 determines whether the predicted coating weight value is within the target value range for the coating weight of the galvanized steel sheet (step S105). The operational parameter identification unit 82 compares the predicted coating weight value with the target value range and, when it determines that the predicted coating weight value is out of the target value range for the coating weight of the galvanized steel sheet (step S105, No), it changes the operational parameter(s) of the coating section 15 according to a predetermined condition (step S106), and returns the process to step S104. The coating weight prediction unit 80 inputs the changed operational parameter(s) of the coating section 15, and the already-acquired operational parameter(s) of the annealing section 14 and quality property parameter(s) of the steel strip 10 into the coating weight prediction model 88, and predicts a coating weight again. The process steps S104 to S106 are repeated until it is determined in step S105 that a predicted coating weight is within the target value range.

On the other hand, when the operational parameter identification unit 82 determines in step S105 that the predicted coating weight value is within the target value range (step S105, Yes), it identifies the operational parameter(s) of the coating section 15, used for the prediction of the coating weight, as an operational parameter(s) of the coating section 15 which can make the coating weight within the target value range (step S107). The process from step S105 to step S107 corresponds to an operational parameter identification step in a galvanized steel strip production method.

The flow of the operational parameter identification process shown in FIG. 5 is completed when the operational parameter(s) of the coating section 15 is identified by the operational parameter identification unit 82. The operational parameter identification unit 82 outputs the identified operational parameter(s) of the coating section 15 to the process computer 54. The process computer 54 sets the identified operational parameter(s) of the coating section 15 as an operational parameter(s) of the coating section 15 to produce a galvanized steel strip under production conditions including the operational parameter(s). Such a production process corresponds to a galvanized steel strip production step in a galvanized steel strip production method.

In this manner, it is possible to identify an operational parameter(s) of the coating section 15 which can control the coating weight of a galvanized steel strip within a target value range. By producing a galvanized steel strip under production conditions including the operational parameter(s), it becomes possible to stably produce a galvanized steel strip whose coating weight falls within the target value range.

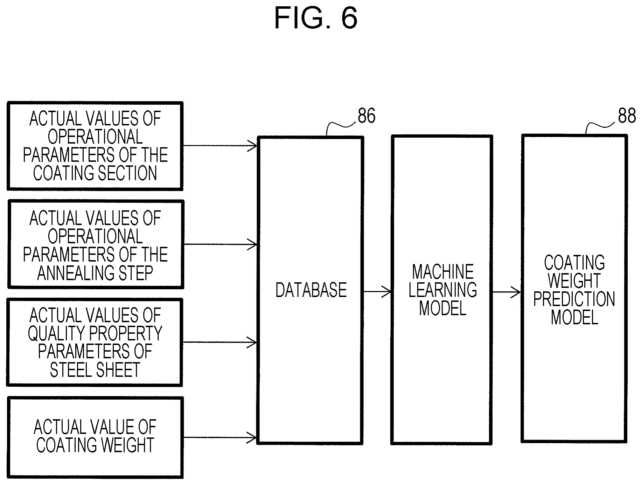

A description will now be given of a coating weight prediction model generation method for use in the prediction of a coating weight. FIG. 6 is a schematic diagram showing a method for generating the coating weight prediction model. The parameter acquisition unit 78 acquires from the process computer 54 actual values of operational parameters of the coating section 15 and actual values of operational parameters of the annealing section 14 for a galvanized steel strip produced in the past, actual values of quality property parameters of the steel strip 10, and an actual value of the coating weight of the galvanized steel strip, which constitute each of data sets, and stores the data sets in a database 86 of the storage unit 76. The number of the data sets stored in the database 86 is preferably at least 200, more preferably at least 1000. The processing by the parameter acquisition unit 78 corresponds to a data set acquisition step in the coating weight prediction model generation method.

The coating weight prediction model generation unit 84 reads a pre-stored machine learning model from the storage unit 76, and subjects the machine learning model to machine learning using the data sets, stored in the database 86, as training data to generate a machine-learned model. This machine-learned model is the coating weight prediction model 88. The processing by the coating weight prediction model generation unit 84 corresponds to a coating weight prediction model generating step in the coating weight prediction model generation method. The machine learning model for use in the coating weight prediction device 56 of this embodiment may be any of a neural network, decision tree learning, random forest, and support vector regression which are commonly used.

The coating weight prediction model is preferably updated to a new shape prediction model by re-performing machine learning, for example, every month or every year. The parameter acquisition unit 78 acquires actual values every time a galvanized steel strip is produced, and stores them in the database 86. The database 86 thus repeatedly stores data sets of newly-produced galvanized steel strips, and therefore the number of stored data sets increases. The increase in the number of data sets enables the prediction of coating weight with higher accuracy. Thus, by periodically updating the shape prediction model through machine learning using the data sets stored in the database 86, the coating weight of a galvanized steel strip can be predicted with higher accuracy.

As described above, the input data of the coating weight prediction model used in the coating weight prediction device 56 of this embodiment includes an operational parameter(s) of the annealing section 14. As described above, the operational parameter(s) of the annealing section 14 affects the coating weight of a galvanized steel strip. Therefore, the including of the operational parameter(s) of the annealing section 14 in the input data of the coating weight prediction model allows it to function as a coating weight prediction model that takes account of the annealing section 14, and can predict the coating weight of a galvanized steel strip with higher accuracy. This makes it possible to prevent the production of a galvanized steel strip whose coating weight exceeds a target value range, thereby preventing an increase in the production cost of a galvanized steel strip and a reduction in productivity.

While the galvanized steel strip production facility 100 shown in FIG. 1 includes the process computer 54 and the coating weight prediction device 56, the present invention is not limited to this feature. For example, the coating weight prediction device 56 may have the function of the process computer 54; they may be configured as one device. While in the coating weight prediction device 56 shown in FIG. 4, the control unit 70 includes the operational parameter identification unit 82 and the coating weight prediction model generation unit 84, the present invention is not limited to this feature. If the coating weight prediction device 56 merely predicts the coating weight of a galvanized steel strip, the control unit 70 need not include the operational parameter identification unit 82. If the coating weight prediction model 88 is generated externally, and the generated coating weight prediction model 88 is stored in the storage unit 76 via the parameter acquisition unit 78, the coating weight prediction device 56 need not include the coating weight prediction model generation unit 84.

### EXAMPLES

Examples will now be described. 200 coils of galvanized steel strips were produced using the galvanized steel strip production facility 100 shown in FIG. 1. The actual values of operational parameters of the coating section 15, the actual values of operational parameters of the annealing section, the actual values of quality property parameters of the steel strip 10, and the actual values of the coating weight were acquired from data on the actual operation of the facility 100. The actual values of the push-in amount of the support rolls 60 against the steel strip 10, the height of the nozzles 62 from the bath surface, the distance between each nozzle 62 and the steel strip 10, and the wiping gas ejection pressure of the nozzles 62 were acquired as the operational parameters of the coating section 15.

The actual vales of the line speed of the steel strip 10 in the annealing section 14 and the surface temperature of the steel strip 10 being dipped into the galvanizing bath 36 were acquired as the operational parameters of the annealing section 14. The surface temperature of the steel strip 10 was measured using a radiation thermometer provided upstream of the galvanizing bath 36.

The actual values of the thickness, the width, the yield stress, and the surface roughness of the steel strip 10 were acquired as the quality property parameters of the steel strip 10. The surface roughness of the steel strip 10 was measured by means of a surface roughness meter using laser irradiation, provided upstream of the galvanizing bath 36. The actual coating weight of a galvanized steel strip was measured using an X-ray fluorescence thickness meter.

Different coating weight prediction models 1 to 3 were generated by varying the actual parameter values for use as training data in the respective models. Conditions for the generation of the coating weight prediction models 1 to 3 are as follows.

Coating weight prediction model 1: a coating weight prediction model generated by subjecting a machine learning model to machine learning using, as training data, 10,000 data sets, each consisting of actual values of the operational parameters of the coating section 15 and an actual value of the coating weight.

Coating weight prediction model 2: a coating weight prediction model generated by subjecting a machine learning model to machine learning using, as training data, 10,000 data sets, each consisting of actual values of the operational parameters of the coating section 15, actual values of the operational parameters of the annealing section 14, and an actual value of the coating weight.

Coating weight prediction model 3: a coating weight prediction model generated by subjecting a machine learning model to machine learning using, as training data, 10,000 data sets, each consisting of actual values of the operational parameters of the coating section 15, actual values of the operational parameters of the annealing section 14, actual values of the quality property parameters of the steel strip 10, and an actual value of the coating weight.

Using the coating weight prediction models 1 to 3 thus generated and following the flow shown in FIG. 5, an operational parameter(s) of the coating section was identified which makes a predicted coating weight value of a galvanized steel strip fall within a target value range, in particular within the range of 48 g/m² to 50 g/m². Then, 100 coils of galvanized steel strips were produced under production conditions including the identified operational parameter(s) of the coating section.

When the coating weight prediction model 1 (comparative example) was used, in 850 of the 100 coils, the coating weight of the galvanized steel strip fell within the above target value range. On the other hand, when the coating weight prediction model 2 (inventive example), whose input data includes the operational parameters of the annealing section, was used, the coating weight of the galvanized steel strip fell within the above target value range in 90% of the 100 coils. When the coating weight prediction model 3 (inventive example), whose input data includes the operational parameters of the annealing section and the quality property parameters of the steel strip 10, was used, the coating weight of the galvanized steel strip fell within the above target value range in 95% of the 100 coils.

Thus, the coating weight of the galvanized steel strip was within the target value range in more coils when the coating weight prediction model 2 or 3 was used than when the coating weight prediction model 1 was used. The results indicate that compared to the use of the coating weight prediction model 1, the use of the coating weight prediction model 2 or 3 can predict a coating weight with higher accuracy, and can identify an operational parameter(s) of the coating section which can make a coating weight fall within the target value range with a higher probability. Reference Signs List

- 10: steel strip
- 12: galvanized steel strip production apparatus
- 13: entry-side section
- 14: annealing section
- 15: coating section
- 16: reheating section
- 17: exit-side section
- 20: payoff reels
- 22: welding machine
- 23: electrolytic cleaning apparatus
- 24: entry-side looper
- 26: preheating zone
- 28: heating zone
- 30: soaking zone
- 32: cooling zone
- 32a: first cooling zone
- 32b: second cooling zone
- 34: snout
- 36: galvanizing bath
- 38: wiping apparatus
- 40: alloying zone
- 42: heat retention zone
- 44: final cooling zone
- 44a: first final cooling zone
- 44b: second final cooling zone
- 46: temper rolling zone
- 48: exit-side looper
- 50: inspection zone
- 52: tension reel
- 54: process computer
- 56: coating weight prediction device
- 58: sink roll
- 60: support rolls
- 62: nozzles
- 70: control unit
- 72: input unit
- 74: output unit
- 76: storage unit
- 78: parameter acquisition unit
- 80: coating weight prediction unit
- 82: operational parameter identification unit
- 84: coating weight prediction model generation unit
- 86: database
- 88: coating weight prediction model
- 100: galvanized steel strip production facility

## Claims

1. A coating weight prediction method for predicting a coating weight of a galvanized steel strip in a galvanized steel strip production facility including a coating section for dipping a steel strip, which has been annealed in an annealing section, in a galvanizing bath, the method comprising:
a parameter acquisition step of acquiring one or more of the operational parameters of the coating section, and one or more of the operational parameters of the annealing section; and
a coating weight prediction step of inputting input data, including the operational parameters acquired in the parameter acquisition step, into a coating weight prediction model, and causing the model to output the coating weight.

2. The coating weight prediction method according to claim 1, wherein in the parameter acquisition step, one or more of the quality property parameters of the steel strip are also acquired, and in the coating weight prediction step, input data including the operational parameters and the quality property parameters, acquired in the parameter acquisition step, is inputted into the coating weight prediction model, and the model is caused to output the coating weight.

3. The coating weight prediction method according to claim 1 or 2, wherein the coating weight prediction model is a machine-learned model obtained by subjecting a machine learning model to machine learning using a plurality of data sets, each consisting of actual values of the input data and an actual value of the coating weight, as training data.

4. The coating weight prediction method according to claim 3, wherein the machine learning model is one of a neural network, decision tree learning, random forest, and support vector regression.

5. A method for producing a galvanized steel strip using a galvanized steel strip production facility including a coating section for dipping a steel strip, which has been annealed in an annealing section, in a galvanizing bath, the method comprising:
an operational parameter identification step of identifying an operational parameter of the coating section which makes a coating weight, predicted in the coating weight prediction step in the coating weight prediction method according to claim 1 or 2, fall within a preset target value range; and
a galvanized steel strip production step of producing a galvanized steel strip under production conditions including the operational parameter of the coating section, identified in the operational parameter identification step.

6. A method for producing a galvanized steel strip using a galvanized steel strip production facility including a coating section for dipping a steel strip, which has been annealed in an annealing section, in a galvanizing bath, the method comprising:
an operational parameter identification step of identifying an operational parameter of the coating section which makes a coating weight, predicted in the coating weight prediction step in the coating weight prediction method according to claim 3, fall within a preset target value range; and
a galvanized steel strip production step of producing a galvanized steel strip under production conditions including the operational parameter of the coating section, identified in the operational parameter identification step.

7. A method for producing a galvanized steel strip using a galvanized steel strip production facility including a coating section for dipping a steel strip, which has been annealed in an annealing section, in a galvanizing bath, the method comprising:
an operational parameter identification step of identifying an operational parameter of the coating section which makes a coating weight, predicted in the coating weight prediction step in the coating weight prediction method according to claim 4, fall within a preset target value range; and
a galvanized steel strip production step of producing a galvanized steel strip under production conditions including the operational parameter of the coating section, identified in the operational parameter identification step.

8. A method for generating a coating weight prediction model for predicting a coating weight of a galvanized steel strip in a galvanized steel strip production facility including a coating section for dipping a steel strip, which has been annealed in an annealing section, in a galvanizing bath, the method comprising:
a data set acquisition step of acquiring a plurality of data sets, each consisting of actual values of input data and an actual value of the coating weight, the input data including one or more of the operational parameters of the coating section, and one or more of the operational parameters of the annealing section; and
a coating weight prediction model generation step of subjecting a machine learning model to machine learning using the plurality of data sets as training data to generate the coating weight prediction model.

9. The method for generating a coating weight prediction model according to claim 8, wherein in the data set acquisition step are acquired a plurality of data sets, each consisting of actual values of input data and an actual value of the coating weight, the input data including one or more of the operational parameters of the coating section, one or more of the operational parameters of the annealing section, and one or more of the quality property parameters of the steel strip.

10. The method for generating a coating weight prediction model according to claim 8 or 9, wherein the machine learning model is one of a neural network, decision tree learning, random forest, and support vector regression.

11. A coating weight prediction device for predicting a coating weight of a galvanized steel strip in a galvanized steel strip production facility including a coating section for dipping a steel strip, which has been annealed in an annealing section, in a galvanizing bath, the device comprising:
a parameter acquisition unit for acquiring one or more of the operational parameters of the coating section, and one or more of the operational parameters of the annealing section; and
a coating weight prediction unit for inputting input data, including the operational parameters acquired in the parameter acquisition unit, into a coating weight prediction model, and causing the model to output the coating weight.

12. The coating weight prediction device according to claim 11, wherein the parameter acquisition unit also acquires one or more of the quality property parameters of the steel strip, and the coating weight prediction unit inputs input data including the operational parameters and the quality property parameters, acquired in the parameter acquisition unit, into the coating weight prediction model, and causes the model to output the coating weight.
